# EUROPEAN PATENT APPLICATION

(11) **EP 4 787 471 A1**
(43) Date of publication of application: **05.08.2026**
(21) Application number: 24932390.8
(22) Date of filing: 15.11.2024
(51) Int. Cl.: H01M 4/36, H01M 10/0525, H01M 4/62

(54) **DOUBLE-LAYER-COATED LITHIUM-ION POSITIVE ELECTRODE MATERIAL, AND PREPARATION METHOD THEREFOR AND USE THEREOF**

(30) Priority: 28.03.2024 CN 202410366762
(71) Applicant: XTC New Energy Materials (Xiamen) Ltd., Xiamen, Fujian 361000 (CN)
(72) Inventor: ZENG, Leiying, Xiamen, Fujian 361000 (CN); WEI, Xiaonan, Xiamen, Fujian 361000 (CN); ZOU, Minghua, Xiamen, Fujian 361000 (CN)
(74) Representative: Deambrogi, Edgardo
(86) International application number: PCT/CN2024/132451
(87) International publication number: WO 2025/200490

(57) **Abstract**

The present invention relates to the technical field of lithium batteries. Disclosed are a double-layer-coated lithium-ion positive electrode material, and a preparation method therefor and the use thereof. The double-layer-coated lithium-ion positive electrode material sequentially comprises a positive electrode active material, an ion transport coating layer and an interstitial inert material coating layer at a mass ratio of 100: (0.05-5): (0.02-3) from inside to outside, wherein the components of the ion transport coating layer comprise a first component and a second component, the first component comprising at least one of Li₂CO₃ and Li₂O, and the second component being a lithium-containing metallic compound; and the interstitial inert material coating layer is at least one of a non-Al metallic oxide and an Al-containing compound. The interstitial inert material coating layer can play a role in protecting the surface of the material during the process of cycling; moreover, since the interstitial inert material coating layer is in an interstitial state, the transport of lithium ions is not hindered, the impedance of the material is not significantly increased, ion dissolution from the surface of the material is significantly reduced, and the performance of the positive electrode material is significantly improved.

## Description

### CROSS-REFERENCE TO THE RELATED APPLICATION

The present invention claims priority to Chinese Patent Application No. 2024103667627, filed with the China National Intellectual Property Administration on March 28, 2024, and entitled "DOUBLE-LAYER-COATED LITHIUM-ION POSITIVE ELECTRODE MATERIAL, AND PREPARATION METHOD THEREFOR AND USE THEREOF", which is incorporated herein by reference in entirety.

### TECHNICAL FIELD

The present invention relates to the technical field of lithium batteries, and specifically related to a double-layer-coated lithium-ion positive electrode material, and a preparation method therefor and use thereof.

### BACKGROUND ART

Lithium-ion batteries possess ultra-high energy density and extremely long service life. Their role in replacing fossil fuels is gradually deepening, while they are also gaining wider application in daily life. Mobile phones and electric vehicles have become closely integrated into lives of people. Therefore, from a safety perspective, the stability of lithium batteries needs to meet higher standards. Positive electrode materials are a crucial component of the lithium batteries, and improvements in the positive electrode materials can significantly affect performances of finished lithium batteries. Therefore, there is an urgent need to enhance the safety performance of the lithium-ion batteries by modifying a preparation process of the positive electrode materials to develop lithium-ion batteries with high safety.

Conventionally prepared positive electrode materials have a coating layer on surfaces thereof, which can mitigate side reactions between an electrolyte solution and the materials during the process of cycling of the lithium-ion batteries, thereby improving cycling performances of the materials. Currently, an efficient and energy-saving construction of coating layers on surfaces of the materials of the lithium-ion battery has attracted extensive research. Currently, it is difficult to uniformly and completely coat the coating materials on the surfaces. Insufficient coating amount leaves uncoated substrates exposed to the electrolyte solution, while a relatively thick coating layer severely hinders transport of lithium ions, leading to a significant increase in the impedance of the materials. Currently, continuously research into novel coating methods is ongoing, aiming to further improve the performances of the lithium batteries.

In view of this, the present invention is specifically proposed.

### SUMMARY

An objective of the present invention is to provide a double-layer-coated lithium-ion positive electrode material, and a preparation method therefor and use thereof.

The present invention is achieved as follows.

In the first aspect, the present invention provides a double-layer-coated lithium-ion positive electrode material, wherein the double-layer-coated lithium-ion positive electrode material sequentially includes a positive electrode active material, an ion transport coating layer and an interstitial inert material coating layer at a mass ratio of 100: 0.05-5: 0.02-3 from inside to outside, wherein
components of the ion transport coating layer include a first component and a second component, the first component including at least one selected from the group consisting of Li₂CO₃ and Li₂O, and the second component being a lithium-containing metallic compound; and
the interstitial inert material coating layer is at least one selected from the group consisting of a non-Al metal oxide and an Al-containing compound.

In an optional embodiment, a mass of the ion transport coating layer accounts for 0.1%-0.3% of a total mass of the positive electrode active material, and a mass of the interstitial inert material coating layer accounts for 0.05%-0.15% of the total mass of the positive electrode active material.

In an optional embodiment, the lithium-containing metallic compound includes at least one selected from the group consisting of LiAlO₂, LiY₂O₃, Li₂ZrO₃, and Li₂TiO₃.

In an optional embodiment, an interstitial state of the interstitial inert material coating layer is of a mesh structure.

In an optional embodiment, the non-Al metal oxide includes at least one selected from the group consisting of La₂O₃ and ZrO₂; and
preferably, the Al-containing compound includes at least one selected from the group consisting of Al₂O₃, LiAlO₂, and Al(OH)₃.

In the second aspect, the present invention provides a preparation method for the double-layer-coated lithium-ion positive electrode material according to any one of the above-mentioned embodiments, including:
mixing the positive electrode active material with raw materials of the ion transport coating layer via ball milling, followed by sintering to obtain a first sintered material with the ion transport coating layer coated on a surface of the positive electrode active material, wherein the raw materials of the ion transport coating layer include a metal oxide;
mixing raw materials of the interstitial inert material coating layer, a coating additive, and a solvent to form a mixed solution, wherein the raw materials of the interstitial inert material coating layer include a metal element-containing compound; and
adding the first sintered material to the mixed solution, adjusting a pH to 11-12, stirring and mixing, drying, and subjecting to sintering to obtain a second sintered material with the interstitial inert material coating layer coated on a surface of the ion transport coating layer, so as to obtain the double-layer-coated lithium-ion positive electrode material.

In an optional embodiment, a mass of the coating additive is 0.1%-2% of the total mass of the positive electrode active material.

In an optional embodiment, the coating additive includes at least one selected from the group consisting of hydroxypropyl methylcellulose, gelatin, starch and polyethylene glycol.

In an optional embodiment, a temperature of the sintering of both the first sintered material and the second sintered material is 700 °C to 900 °C.

In the third aspect, the present invention provides use of the double-layer-coated lithium-ion positive electrode material according to any one of the above-mentioned embodiments, or the double-layer-coated lithium-ion positive electrode material prepared by the preparation method for the double-layer-coated lithium-ion positive electrode material according to any one of the above-mentioned embodiments, in preparation of a lithium-ion battery.

The present invention has following beneficial effects.

The double-layer-coated lithium-ion positive electrode material provided by the present invention is prepared by first coating the ion transport coating layer on the surface of the positive electrode active material, followed by coating the interstitial inert material coating layer on the surface of the ion transport coating layer. The interstitial inert material coating layer can play a role in protecting the surface of the material during the process of cycling. Moreover, since the interstitial inert material coating layer is in an interstitial state, the transport of lithium ions is not hindered, the impedance of the material is not significantly increased. The interstitial inert material coating layer can also significantly reduce ion dissolution from the surface of the positive electrode material, preventing negative impacts of ion dissolution on a battery. The preparation method for double-layer-coated lithium-ion positive electrode material provided by the present invention involves introducing a coating additive, such that the raw materials of the interstitial inert material coating layer can be interstitially attached and fixed onto a surface of the first sintered material without displacement under an adhesion action of the coating additive. During sintering, the coating materials bond tightly to a substrate, achieving good adhesion of the interstitial inert material coating layer, and effectively preventing the positive electrode active material from contacting an electrolyte solution while ensuring transport of lithium ions, thereby resulting in better cycling performances of the positive electrode material.

### BRIEF DESCRIPTION OF DRAWINGS

To more clearly illustrate the technical solutions of embodiments of the present invention, drawings that need to be used in the embodiments will be briefly introduced below. It should be understood that the drawings described below only illustrate some embodiments of the present invention and should not be regarded as a limitation of the scope. For those ordinarily skilled in the art, other relevant drawings can be obtained based on these drawings without making any inventive effort.
FIG. 1 is a SEM image of one double-layer-coated lithium-ion positive electrode material provided by an embodiment of the present invention; and
FIG. 2 is a SEM image of another double-layer-coated lithium-ion positive electrode material provided by an embodiment of the present invention.

### DETAILED DESCRIPTION OF EMBODIMENTS

To make objectives, technical solutions, and advantages of embodiments of the present invention clearer, the technical solutions of the embodiments of the present invention will be clearly and completely described below. Unless otherwise specified in the embodiments, conventional conditions or conditions recommended by the manufacturer are followed. Reagents or instruments used, unless otherwise specified, are all conventional products that can be purchased commercially.

The present invention provides a double-layer-coated lithium-ion positive electrode material, including a positive electrode active material, an ion transport coating layer and an interstitial inert material coating layer.

In the present invention, the ion transport coating layer is configured to realize transport of lithium ions. The ion transport coating layer is coated on a surface of the positive electrode active material. Components of the ion transport coating layer include a first component and a second component, the first component including at least one selected from the group consisting of Li₂CO₃ and Li₂O, and the second component being a lithium-containing metallic compound. The lithium-containing metallic compound includes at least one selected from the group consisting of LiAlO₂, LiY₂O₃, Li₂ZrO₃, and Li₂TiO₃. The first component is an unavoidable residue left during a preparation of the positive electrode active material, while the second component is primarily formed after the metal compound reacts with lithium and intercalates into lithium. The second component is a functional component in the ion transport coating layer, which is mainly configured to achieve transport of lithium ions. A mass of the ion transport coating layer accounts for 0.05%-5% of a total mass of the positive electrode active material; preferably, the mass of the ion transport coating layer accounts for 0.1%-0.5% of the total mass of the positive electrode active material. The present invention can achieve good coating while maintaining excellent transport capability of lithium ions by limiting a mass percentage of the ion transport coating layer.

The interstitial inert material coating layer is used as the outermost layer for coating, and coated on a surface of the ion transport coating layer. The interstitial inert material coating layer can effectively prevent the positive electrode active material from being exposed to an electrolyte solution. Meanwhile, due to the interstitial inert material coating layer being an interstitial coating, it does not hinder transport of lithium ions. In the present invention, the interstitial inert material coating layer is at least one selected from the group consisting of a non-Al metal oxide and an Al-containing compound. The non-Al metal oxide includes at least one selected from the group consisting of La₂O₃ and ZrO₂; and the Al-containing compound includes at least one selected from the group consisting of Al₂O₃, LiAlO₂, and Al(OH)₃. Since a state of a material formed during a coating process is uncertain, it is speculated from raw materials that Al₂O₃ is mainly formed, and LiAlO₂ material may be formed, and partial moisture absorption may lead to formation of Al(OH)₃. A structure of interstitium in the interstitial inert material coating layer can be various, such as a mesh, spaced dots, or stripes. A mass of the interstitial inert material coating layer accounts for 0.02%-3% of the total mass of the positive electrode active material; preferably, the mass of the interstitial inert material coating layer accounts for 0.04%-0.2% of the total mass of the positive electrode active material.

In the present invention, by coating an interstitial inert material coating layer on the surface of the ion transport coating layer, the interstitial inert material coating layer is distributed in an interstitial state on the surface of the material. Through a sintering step, the coating material is closely bonded to a substrate, which can play a role in protecting the surface of the material during the process of cycling. Moreover, since the interstitial inert material coating layer is in an interstitial state, the transport of lithium ions is not hindered, and the impedance of the material is not significantly increased. The interstitial inert material coating layer can also significantly reduce ion dissolution from the surface of the positive electrode material, preventing negative impacts of ion dissolution on a battery.

In addition, the present invention provides a preparation method for the above double-layer-coated lithium-ion positive electrode material, including following steps.

S1. The positive electrode active material is mixed with raw materials of the ion transport coating layer via ball milling, followed by sintering to obtain a first sintered material with the ion transport coating layer coated on a surface of the positive electrode active material, wherein the raw materials of the ion transport coating layer include a metal oxide; and the metal oxide includes but are not limited to Al₂O₃, Y₂O₃, La₂O₃, ZrO₂ and TiO₂. The above-mentioned metal oxides can achieve lithium-ion intercalation during ball milling with the positive electrode active material. After sintering at a temperature of the sintering of 700 °C to 900 °C, the lithium-containing metallic compound (at least one of LiAlO₂, LiY₂O₃, Li₂ZrO₃, and Li₂TiO₃) can be formed, and the lithium-containing metallic compound is served as the ion transport coating layer.

S2. The raw materials of the interstitial inert material coating layer, a coating additive, and a solvent are mixed to form a mixed solution, wherein the raw materials of the interstitial inert material coating layer include a metal element-containing compound.

A mass of the coating additive is 0.1%-0.3% of the mass of raw materials of the interstitial inert material coating layer. The coating additive includes at least one selected from the group consisting of hydroxypropyl methylcellulose, gelatin, starch and polyethylene glycol.

In the present invention, pre-mixing the raw materials of the interstitial inert material coating layer and the coating additive is beneficial for subsequent coating additive to coat the raw materials of the interstitial inert material coating layer on a surface of the first sintered material.

S3. The first sintered material is added to the mixed solution, the pH is adjusted to 11-12, followed by stirring and mixing, drying, and subjecting to sintering to obtain a second sintered material with the interstitial inert material coating layer coated on the surface of the ion transport coating layer, yielding the double-layer-coated lithium-ion positive electrode material.

In the present invention, by adjusting the pH value to 11-12, an alkaline condition is more conducive to an adhesive effect of the coating additive. The raw materials of the interstitial inert material coating layer can be fixed onto a surface of the first sintered material without displacement under an action of the coating additive. However, due to a small amount of the coating additive, it can only adhere in an interstitial manner on the surface of the first sintered material. When the sintering is performed at a temperature of the sintering of 700 °C to 900 °C subsequently, the coating material is closely bonded to the substrate, which can play a role in protecting the surface of the material during the process of cycling. Moreover, since the interstitial inert material coating layer is in an interstitial state, the transport of lithium ions is not hindered, and the impedance of the material is not significantly increased. The interstitial inert material coating layer can also significantly reduce ion dissolution from the surface of the positive electrode material, preventing negative impacts of ion dissolution on a battery.

In addition, the present invention further provides use of the above-mentioned double-layer-coated lithium-ion positive electrode material in preparation of a lithium-ion battery, and the lithium-ion battery prepared thereby exhibits good cycling performances.

Features and performances of the present invention are further described in detail below in conjunction with examples.

In the first example, the present example provided a double-layer-coated lithium-ion positive electrode material, and a preparation method therefor was as follows:
S1: 1 kg of lithium cobalt oxide semi-finished material and 4 g of Y₂O₃ and 2 g of TiO₂, as the raw materials of the ion transport coating layer, were placed in a ball mill jar and mixed at a speed of the ball mill jar of 25 Hz for 3 h to obtain a first mixture; and the first mixture was sintered at 800 °C for 12 h to obtain the first sintered material;
S2: 10 g of meta-aluminic acid as a raw material of Al and 2 g of hydroxypropyl methylcellulose (HPMC) as a coating additive were added to 2 L of deionized water, followed by stirring for 10 min to obtain a mixed solution; and
S3: the first sintered material was added to the mixed solution, and the pH was adjusted to 12, followed by continuously stirring for 20 min, filtrating and drying to obtain a second mixture. The second mixture was subjected to sintering at 800 °C for 8 h to obtain the double-layer-coated lithium-ion positive electrode material.

After testing, it was found that a core layer of the double-layer-coated lithium-ion positive electrode material is lithium cobalt oxide, coated with the ion transport coating layer with a mass about 0.3%. The ion transport coating layer contains Li₂CO₃, Li₂O, LiYO₂, and Li₄Ti₅O. A surface of the ion transport coating layer is coated with an interstitial inert material coating layer of Al₂O₃ with a mass about 0.15%.

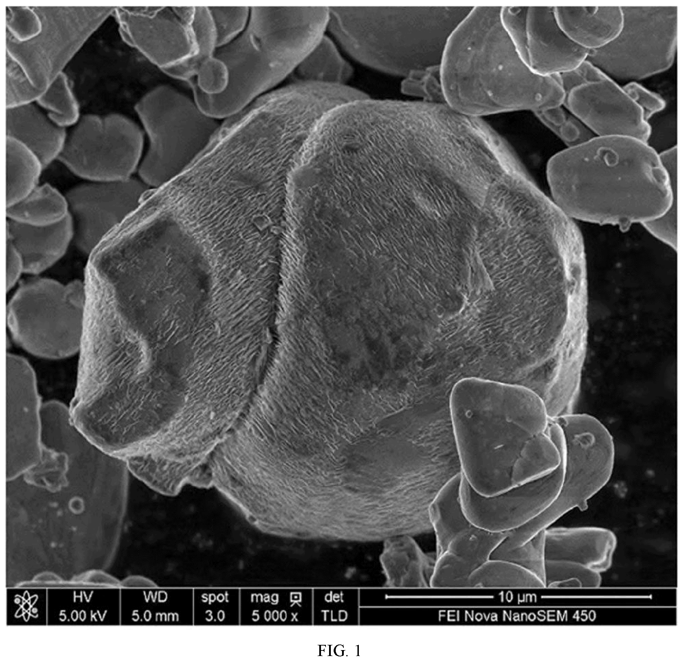

Referring to FIG. 1, it can be seen from FIG. 1 that the interstitial coating layer shows a mesh structure coated on a surface of the lithium cobalt oxide material.

The second example and the third example were basically the same as the first example, differing only in amounts of the raw materials of the ion transport coating layer and the interstitial inert material coating layer.

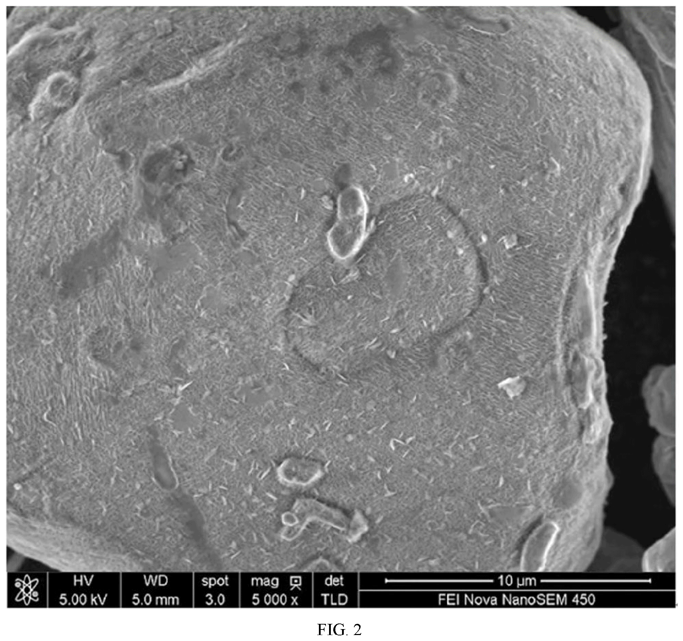

In the second example, as a raw material of the ion transport coating layer, an addition amount of Y₂O₃ was 2 g, an addition amount of TiO₂ was 1g, and an addition amount of meta-aluminic acid was 5 g. As shown in FIG. 2, after testing, it was found that a core layer of the double-layer-coated lithium-ion positive electrode material is lithium cobalt oxide, coated with the ion transport coating layer with a mass about 0.15%. The ion transport coating layer contains Li₂CO₃, Li₂O, LiYO₂, and Li₄Ti₅O. A surface of the ion transport coating layer is coated with an interstitial inert material coating layer of Al₂O₃ with a mass about 0.08%.

In the third example, as a raw material of the ion transport coating layer, an addition amount of Y₂O₃ was 2 g, and an addition amount of meta-aluminic acid was 3 g. After testing, it was found that a core layer of the double-layer-coated lithium-ion positive electrode material is lithium cobalt oxide, coated with the ion transport coating layer with a mass about 0.1%. The ion transport coating layer contains Li₂CO₃, Li₂O, and LiYO₂. A surface of the ion transport coating layer is coated with an interstitial inert material coating layer of Al₂O₃ with a mass about 0.05%.

The fourth example was basically the same as the first example, differing only in that the raw material for the ion transport coating layer in the present example was La₂O₃. A specific preparation method was as follows:
S1: 1 kg of lithium cobalt oxide semi-finished material and 4 g of La₂O₃, as the raw material of the ion transport coating layer, were placed in a ball mill jar and mixed at a speed of the ball mill jar of 25 Hz for 3 h to obtain a first mixture; and the first mixture was sintered at 800 °C to obtain the first sintered material;
S2: 10 g of meta-aluminic acid as a raw material of Al and 2 g of hydroxypropyl methylcellulose (HPMC) as a coating additive were added to 2 L of deionized water, followed by stirring for 10 min to obtain a mixed solution; and
S3: the first sintered material was added to the mixed solution, and the pH was adjusted to 12, followed by continuously stirring for 20 min, filtrating and drying to obtain a second mixture. The second mixture was subjected to sintering at 800 °C to obtain the double-layer-coated lithium-ion positive electrode material.

After testing, it was found that a core layer of the double-layer-coated lithium-ion positive electrode material is lithium cobalt oxide, coated with the ion transport coating layer with a mass about 0.3%. The ion transport coating layer contains Li₂CO₃, Li₂O, and La₂O₃. A surface of the ion transport coating layer is coated with an interstitial inert material coating layer of Al₂O₃ with a mass about 0.15%.

The fifth example was basically the same as the first example, differing only in that the raw materials for the ion transport coating layer in the present example were ZrO₂ and TiO₂. A specific preparation method was as follows.

The present example provides a double-layer-coated lithium-ion positive electrode material, and a preparation method therefor was as follows:
S1: 1 kg of lithium cobalt oxide semi-finished material and 4 g of ZrO₂ and 0.6 g of TiO₂, as raw materials of the ion transport coating layer, were placed in a ball mill jar and mixed at a speed of the ball mill jar of 25 Hz for 3 h to obtain a first mixture; and the first mixture was sintered at 800 °C to obtain the first sintered material;
S2: 10 g of meta-aluminic acid as a raw material of Al and 2 g of hydroxypropyl methylcellulose (HPMC) as a coating additive were added to 2 L of deionized water, followed by stirring for 10 min to obtain a mixed solution; and
S3: the first sintered material was added to the mixed solution, and the pH was adjusted to 12, followed by continuously stirring for 20 min, filtrating and drying to obtain a second mixture. The second mixture was subjected to sintering at 800 °C to obtain the double-layer-coated lithium-ion positive electrode material.

After testing, it was found that a core layer of the double-layer-coated lithium-ion positive electrode material is lithium cobalt oxide, coated with the ion transport coating layer with a mass about 0.3%. The ion transport coating layer contains Li₂CO₃, Li₂O, Li₂ZrO₃ and Li₄Ti₅O. A surface of the ion transport coating layer is coated with an interstitial inert material coating layer of Al₂O₃ with a mass about 0.15%.

The sixth example was basically the same as the first example, differing only in that the raw material of the interstitial inert material coating layer in the present example was Y₂O₃ and TiO₂. A specific preparation method was as follows:
S1: 1 kg of lithium cobalt oxide semi-finished material and 4 g of Y₂O₃ and 2 g of TiO₂, as raw materials of the ion transport coating layer, were placed in a ball mill jar and mixed at a speed of the ball mill jar of 25 Hz for 3 h to obtain a first mixture; and the first mixture was sintered at 800 °C to obtain the first sintered material;
S2: 10 g of lanthanum nitrate as a raw material of La and 2 g of hydroxypropyl methylcellulose (HPMC) as a coating additive were added to 2 L of deionized water, followed by stirring for 10 min to obtain a mixed solution; and
S3: the first sintered material was added to the mixed solution, and the pH was adjusted to 12, followed by continuously stirring for 20 min, filtrating and drying to obtain a second mixture. The second mixture was subjected to sintering at 800 °C to obtain the double-layer-coated lithium-ion positive electrode material.

After testing, it was found that a core layer of the double-layer-coated lithium-ion positive electrode material is lithium cobalt oxide, coated with the ion transport coating layer with a mass about 0.3%. The ion transport coating layer contains Li₂CO₃, Li₂O, LiYO₂ and Li₄Ti₅O. A surface of the ion transport coating layer is coated with an interstitial inert material coating layer of La₂O₃ with a mass about 0.1%.

The seventh example was basically the same as the first example, differing only in that the raw material of the interstitial inert material coating layer in the present example was Y₂O₃ and TiO₂. A specific preparation method was as follows:
S1: 1 kg of lithium cobalt oxide semi-finished material and 4 g of Y₂O₃ and 2 g of TiO₂, as raw materials of the ion transport coating layer, were placed in a ball mill jar and mixed at a speed of the ball mill jar of 25 Hz for 3 h to obtain a first mixture; and the first mixture was sintered at 800 °C to obtain the first sintered material;
S2: 10 g of zirconium nitrate as a raw material of Zr and 2 g of hydroxypropyl methylcellulose (HPMC) as a coating additive were added to 2 L of deionized water, followed by stirring for 10 min to obtain a mixed solution; and
S3: the first sintered material was added to the mixed solution, and the pH was adjusted to 12, followed by continuously stirring for 20 min, filtrating and drying to obtain a second mixture. The second mixture was subjected to sintering at 800 °C to obtain the double-layer-coated lithium-ion positive electrode material.

After testing, it was found that a core layer of the double-layer-coated lithium-ion positive electrode material is lithium cobalt oxide, coated with the ion transport coating layer with a mass about 0.3%. The ion transport coating layer contains Li₂CO₃, Li₂O, LiYO₂ and Li₄Ti₅O. A surface of the ion transport coating layer is coated with an interstitial inert material coating layer of ZrO₂ with a mass about 0.1%.

The preparation methods for the lithium cobalt oxide semi-finished materials in the above seven examples are conventional preparation methods and are not limited herein.

During the preparation of lithium cobalt oxide, it is unavoidable that Li₂CO₃ and Li₂O will remain on a surface of the lithium cobalt oxide. These residues will then enter the ion transport coating layer as the first component thereof. However, the above residues do not play a functional role in ion transport.

In addition, in addition to the above positive electrode active material, the positive electrode active material can also be LiₓCoᵢNiⱼMnₖMₘO₂₋ₓ, wherein 0.6 < x ≤ 1, 0 ≤ i ≤ 0.4, 0 ≤ j ≤ 0.5, 0 ≤ k ≤ 0.6, 0 ≤ m ≤ 0.2, and i + j + k + m + x = 1, and M is B³⁺, Mg²⁺, K⁺, Ca²⁺, V³⁺, V⁴⁺, Cr³⁺, Cu²⁺, Zn²⁺, Zr⁴⁺, Nb⁵⁺, or Sn⁴⁺. Preparation methods therefor can refer to conventional preparation methods and are not limited herein.

The first comparative example was basically the same as the first example, differing only in that the hydroxypropyl methylcellulose in the first example was omitted. Herein, the outermost coating of the resulting double-layer-coated lithium-ion positive electrode material is a coating layer Al₂O₃, which is a layered coating rather than an interstitial coating.

The second comparative example provided a double-layer-coated lithium-ion positive electrode material, including LiAlO₂ and Al₂O₃ sequentially deposited on a surface of the lithium cobalt oxide semi-finished material via chemical vapor deposition.

The third comparative example was basically the same as the first example, differing only in that, in the present comparative example, the amount of Y₂O₃ of the raw materials of the ion transport coating layer accounted for 8% of the lithium cobalt oxide semi-finished material and the amount of meta-aluminic acid of the raw materials of the interstitial inert material coating layer accounted for 5% of the lithium cobalt oxide semi-finished material.

The fourth comparative example was basically the same as the first example, differing only in that, in the present comparative example, the amount of Al₂O₃ of the raw materials of the ion transport coating layer accounted for 0.01% of the lithium cobalt oxide semi-finished material and the amount of meta-aluminic acid of the raw materials of the interstitial inert material coating layer accounted for 0.01% of the lithium cobalt oxide semi-finished material.

### Experimental Example

The double-layer-coated lithium-ion positive electrode materials prepared in the above seven examples and four comparative examples were subjected to performance testing. Methods for the test included DCR, surface Co ion dissolution amount under acidic conditions, and 50-cycle performance of button cell testing at 45°C. Test results are as follows.

| Example | DCR | Co³⁺ Dissolution Amount (ppm) | Cycling Performance (%) |
|---|---|---|---|
| Example 1 | 12.54 | 214 | 94.68 |
| Example 2 | 11.98 | 284 | 92.89 |
| Example 3 | 10.96 | 307 | 93.61 |
| Example 4 | 11.67 | 241 | 92.87 |
| Example 5 | 11.05 | 232 | 94.02 |
| Example 6 | 11.27 | 276 | 94.35 |
| Example 7 | 12.09 | 298 | 93.66 |
| Comparative Example 1 | 18.57 | 360 | 82.62 |
| Comparative Example 2 | 23.64 | 386 | 84.63 |
| Comparative Example 3 | 40.52 | 273 | 74.54 |
| Comparative Example 4 | 16.48 | 1352 | 79.65 |

As shown in the above table, seven examples of the present invention all achieve relatively low DCR and Co³⁺ dissolution amount. Herein, DCR represents a discharge/charge power capability of a battery; and a smaller DCR value indicates a stronger power capability and a better rate performance of the battery. However, the first comparative example did not add hydroxypropyl methylcellulose. Herein, the outermost coating of the resulting double-layer-coated lithium-ion positive electrode material is a layered Al₂O₃ coating layer. The complete layered coating will hinder the transport of lithium ions, thereby leading to a significant increase in DCR and a significant decrease in cycling performance. In the second comparative example, LiAlO₂ and Al₂O₃ were sequentially deposited via chemical vapor deposition, and the resulting coating is still layered and has a similar effect to that of the first comparative example, leading to a significant increase in DCR and a significant decrease in cycling performance. Moreover, in the third comparative example, the addition amount of the raw material of the coating layer was relatively large, significantly affecting performances of the material, leading to a highly significant increase in DCR and a highly significant decrease in cycling performance. However, Co³⁺ dissolution amount within a range of 200 ppm to 400 ppm is considered to be normal dissolution amount. Therefore, the first comparative examples to the third comparative examples have no significant impact on Co³⁺ dissolution amount. However, in the fourth comparative example, a relatively lower amount of coating layer results in ineffective coating, leading to a significant increase in dissolution amount. Therefore, the seven examples of the present invention can effectively protect the lithium cobalt oxide substrates through constructing the interstitial inert material coating layer on surfaces thereof, significantly improving cycling performance.

In summary, the double-layer-coated lithium-ion positive electrode material provided by the present invention is prepared by first coating the ion transport coating layer on the surface of the positive electrode active material, followed by coating the interstitial inert material coating layer on the surface of the ion transport coating layer. The interstitial inert material coating layer can play a role in protecting the surface of the material during the process of cycling. Moreover, since the interstitial inert material coating layer is in an interstitial state, the transport of lithium ions is not hindered, and the impedance of the material is not significantly increased. The interstitial inert material coating layer can also significantly reduce ion dissolution from the surface of the positive electrode material, preventing negative impacts of the ion dissolution on a battery. The preparation method for the double-layer-coated lithium-ion positive electrode material provided by the present invention involves introducing a coating additive, such that the raw materials of the interstitial inert material coating layer can be interstitially attached and fixed onto a surface of the first sintered material without displacement under an action of the coating additive. During sintering, the coating material bonds tightly to the substrate, achieving good adhesion of the interstitial inert material coating layer, and effectively preventing the positive electrode active material from contacting an electrolyte solution while ensuring transport of lithium ions, thereby resulting in better cycling performances of the positive electrode material.

The above descriptions are merely preferred embodiments of the present invention and are not intended to limit the present invention. Various modifications and variations can be made to the present invention by those skilled in the art. Any amendments, equivalent replacements, improvements, etc., made within the spirit and principles of the present invention shall fall within the scope of protection of the present invention.

### INDUSTRIAL APPLICABILITY

By adopting the above technical solutions and introducing a coating additive, the raw materials of the interstitial inert material coating layer can be interstitially attached and fixed onto a surface of the first sintered material without displacement under an adhesive action of the coating additive. During sintering, the coating material bonds tightly to a substrate, achieving good adhesion of the interstitial inert material coating layer, and effectively preventing the positive electrode active material from contacting an electrolyte solution while ensuring transport of lithium ions, thereby resulting in better cycling performances of the positive electrode material.

## Claims

1. A double-layer-coated lithium-ion positive electrode material, **characterized in that** the double-layer-coated lithium-ion positive electrode material sequentially comprises a positive electrode active material, an ion transport coating layer and an interstitial inert material coating layer at a mass ratio of 100: 0.05-5: 0.02-3 from inside to outside; wherein
components of the ion transport coating layer comprise a first component and a second component, the first component comprising at least one selected from the group consisting of Li₂CO₃ and Li₂O, and the second component being a lithium-containing metallic compound; and
the interstitial inert material coating layer is at least one selected from the group consisting of a non-Al metal oxide and an Al-containing compound.

2. The double-layer-coated lithium-ion positive electrode material according to claim 1, wherein a mass of the ion transport coating layer accounts for 0.1%-0.3% of a total mass of the positive electrode active material, and a mass of the interstitial inert material coating layer accounts for 0.05%-0.15% of the total mass of the positive electrode active material.

3. The double-layer-coated lithium-ion positive electrode material according to claim 1 or 2, wherein the lithium-containing metallic compound comprises at least one selected from the group consisting of LiAlO₂, LiY₂O₃, Li₂ZrO₃, and Li₂TiO₃.

4. The double-layer-coated lithium-ion positive electrode material according to any one of claims 1 to 3, wherein an interstitial state of the interstitial inert material coating layer is of a mesh structure.

5. The double-layer-coated lithium-ion positive electrode material according to any one of claims 1 to 4, wherein the non-Al metal oxide comprises at least one selected from the group consisting of La₂O₃ and ZrO₂; and
preferably, the Al-containing compound comprises at least one selected from the group consisting of Al₂O₃, LiAlO₂, and Al(OH)₃.

6. A preparation method for the double-layer-coated lithium-ion positive electrode material according to any one of claims 1 to 5, **characterized by** comprising:
mixing the positive electrode active material with raw materials of the ion transport coating layer via ball milling, followed by sintering to obtain a first sintered material with the ion transport coating layer coated on a surface of the positive electrode active material, wherein the raw materials of the ion transport coating layer comprise a metal oxide;
mixing raw materials of the interstitial inert material coating layer, a coating additive, and a solvent to form a mixed solution, wherein the raw materials of the interstitial inert material coating layer comprise a metal element-containing compound; and
adding the first sintered material to the mixed solution, adjusting a pH to 11-12, stirring and mixing, drying, and subjecting to sintering to obtain a second sintered material with the interstitial inert material coating layer coated on a surface of the ion transport coating layer, so as to obtain the double-layer-coated lithium-ion positive electrode material.

7. The preparation method for the double-layer-coated lithium-ion positive electrode material according to claim 6, wherein a mass of the coating additive is 0.1%-2% of a total mass of the positive electrode active material.

8. The preparation method for the double-layer-coated lithium-ion positive electrode material according to claim 6 or 7, wherein the coating additive comprises at least one selected from the group consisting of hydroxypropyl methylcellulose, gelatin, starch and polyethylene glycol.

9. The preparation method for the double-layer-coated lithium-ion positive electrode material according to any one of claims 6 to 8, wherein a temperature of the sintering of both the first sintered material and the second sintered material is 700 °C to 900 °C.

10. Use of the double-layer-coated lithium-ion positive electrode material according to any one of claims 1 to 5, or the double-layer-coated lithium-ion positive electrode material prepared by the preparation method for the double-layer-coated lithium-ion positive electrode material according to any one of claims 6 to 9, in preparation of a lithium-ion battery.
